# EUROPEAN PATENT APPLICATION

(11) **EP 4 518 211 A1**
(43) Date of publication of application: **05.03.2025**
(21) Application number: 22938891.3
(22) Date of filing: 25.04.2022
(51) Int. Cl.: H04L 1/18, H04W 72/12

(54) **PROCESSING METHOD FOR HYBRID AUTOMATIC REPEAT REQUEST (HARQ) FEEDBACK, AND APPARATUS THEREFOR**

(71) Applicant: Beijing Xiaomi Mobile Software Co., Ltd., Beijing 100085 (CN)
(72) Inventor: ZHU, Yajun, Beijing 100085 (CN)
(74) Representative: Hersina, Günter
(86) International application number: PCT/CN2022/089101
(87) International publication number: WO 2023/206034

(57) **Abstract**

Disclosed in the embodiments of the present disclosure are a processing method for hybrid automatic repeat request (HARQ) feedback, and an apparatus therefor. The method is executed by means of a terminal device. The method comprises: acquiring first information; and according to the first information, determining whether a terminal device performs HARQ feedback, wherein the first information comprises at least one of the following: an HARQ pattern; and a preset control signaling type. By implementing the embodiments of the present disclosure, the terminal device can determine, on the basis of the acquired first information, whether to perform HARQ feedback, thereby avoiding the problem of HARQ blockage caused by an excessive number of HARQ processes, preventing the effectiveness of data transmission from being reduced due to insufficient HARQ processes of the terminal device, and improving the data transmission efficiency of the terminal device.

## Description

### TECHNICAL FIELD

The present disclosure relates to the technical field of communication, in particular to a hybrid automatic repeat request (HARQ) feedback processing method and apparatus.

### BACKGROUND

In the related art, in communication scenarios where there is a long signal transmission distance between a sender and a receiver (for example, satellites communicate with ground equipment), there will be a large delay in data transmission, so that some Internet of Things (IoT) terminals may have the problem of hybrid automatic repeat request (HARQ) blocking, thereby reducing a transmission rate of the terminal.

### SUMMARY

Embodiments of the present disclosure provide a hybrid automatic repeat request (HARQ) feedback processing method and apparatus, with which a terminal may determine, based on obtained first information, whether to perform HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

A first aspect of the embodiments of the present disclosure provides a HARQ feedback processing method performed by a terminal, and the method includes: obtaining first information; and determining, according to the first information, whether to perform HARQ feedback. The first information comprises at least one of: a HARQ pattern; or a preset control signaling type.

With the technical solution of the present disclosure, the terminal may determine, based on the obtained first information, whether to perform HARQ feedback, so that the reduction of effectiveness of a data transmission due to too many HARQ processes can be avoided, thus improving the efficiency of the data transmission.

In an implementation, the method further includes disabling or enabling the HARQ feedback based on the first information, in which the first information is the HARQ pattern.

In an implementation, obtaining the first information includes: receiving a signaling sent by a network side device; and obtaining the first information according to information indicated by the signaling.

In an optional implementation, obtaining the first information includes: obtaining the first information based on a protocol.

In an implementation, the HARQ pattern includes at least one of: time information of HARQ disabling; or time information of HARQ enabling.

In an optional implementation, the time information includes at least one of: a time starting position; a time ending position; or time length information.

In an optional implementation, disabling or enabling the HARQ feedback based on the first information includes: determining, based on the HARQ pattern, whether the terminal is currently within a HARQ disabled time period, in which the HARQ pattern is the time information of HARQ disabling; in which the HARQ feedback is disabled in a case that the terminal is currently in the HARQ disabled time period; or the HARQ feedback is enabled in a case that the terminal is not currently in the HARQ disabled time period.

In an optional implementation, disabling or enabling the HARQ feedback based on the first information includes: determining, based on the HARQ pattern, whether the terminal is currently within a HARQ enabled time period, in which the HARQ pattern is the time information of HARQ enabling, in which the HARQ feedback is enabled in a case that the terminal is currently in the HARQ enabled time period; or the HARQ feedback is disabled in a case that the terminal is not currently in the HARQ enabled time period.

In an optional implementation, disabling or enabling the HARQ feedback based on the first information includes: determining, based on the HARQ pattern, that the terminal is currently within a HARQ disabled time period, and disabling the HARQ feedback, in which the HARQ pattern is the time information of HARQ enabling and the time information of HARQ enabling; or determining, based on the time information of HARQ enabling, that the terminal is currently within a HARQ enabled time period, and enabling the HARQ feedback.

By implementing the embodiments of the present disclosure, the terminal may enable or disable the HARQ feedback within a preset time period based on the obtained HARQ pattern, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

In an implementation, the first information includes the preset control signaling type, and obtaining the first information includes: receiving a control signaling sent by a network side device, and obtaining a control signaling type of the control signaling.

In an optional implementation, determining, according to the first information, whether to perform HARQ feedback includes: enabling the HARQ feedback, in which the preset control signaling type is configured to indicate that the terminal enables a HARQ function, and the control signaling type of the control signaling is the preset control signaling type; or the preset control signaling type is configured to indicate that the terminal disables the HARQ function, and the control signaling type of the control signaling is not the preset control signaling type; or disabling the HARQ feedback, in which the preset control signaling type is configured to indicate that the terminal enables a HARQ function, and the control signaling type of the control signaling is not the preset control signaling type; or the preset control signaling type is configured to indicate that the terminal disables the HARQ function, and the control signaling type of the control signaling is the preset control signaling type.

With the technical solution of the present disclosure, the terminal may determine, based on the received control signaling, to disable or enable the HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

Optionally, before receiving the control signaling sent by the network side device, and obtaining the control signaling type of the control signaling, the method further includes: receiving a trigger signaling sent by the network side device, in which the trigger signaling is configured to instruct the terminal to trigger HARQ disabling; and enabling a HARQ management and control function within a predefined time range after receiving the trigger signaling.

Optionally, enabling the HARQ feedback includes: enabling the HARQ feedback; in which the preset control signaling type is configured to indicate that the terminal enables the HARQ function, the control signaling is received within the predefined time range, and the control signaling type of the control signaling is the preset control signaling type; or in which the preset control signaling type is configured to indicate that the terminal disables the HARQ function, the control signaling is received within the predefined time range, and the control signaling type of the control signaling is not the preset control signaling type; disabling the HARQ feedback includes: disabling the HARQ feedback; in which the preset control signaling type is configured to indicate that the terminal enables the HARQ function, the control signaling is received within the predefined time range, and the control signaling type of the control signaling is not the preset control signaling type; or in which the preset control signaling type is configured to indicate that the terminal disables the HARQ function, the control signaling is received within the predefined time range, and the control signaling type of the control signaling is the preset control signaling type.

With the technical solution of the present disclosure, the terminal may disable the HARQ feedback based on the trigger signaling, and determine, based on the control signaling, to disable or enable the HARQ feedback within the preset time range, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

A second aspect of the embodiments of the present disclosure provides a HARQ feedback processing method performed by a network side device, and the method includes: sending first information to a terminal, in which the first information is configured to indicate whether the terminal performs HARQ feedback or not; the first information comprises at least one of: a HARQ pattern; or a preset control signaling type.

With the technical solution of the present disclosure, the network side device may send the first information to the terminal to cause the terminal to determine, based on the control signaling, whether to perform HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

In an implementation, the HARQ pattern includes at least one of: time information of HARQ disabling; or time information of HARQ enabling.

In an optional implementation, the time information includes at least one of: a time starting position; a time ending position; or time length information.

In an implementation, the first information includes the preset control signaling type, and sending the first information to the terminal includes: sending a control signaling to the terminal, in which the control signaling is used for the terminal to enable the HARQ feedback in a case that a control signaling type of the control signaling is the preset control signaling type, and to disable the HARQ feedback in a case that the control signaling type of the control signaling is not the preset control signaling type; or the control signaling is used for the terminal to disable the HARQ feedback in a case that the control signaling type of the control signaling is the preset control signaling type, and to enable the HARQ feedback in a case that the control signaling type of the control signaling is not the preset control signaling type.

In an optional implementation, before sending the control signaling to the terminal, the method further includes: sending a trigger signaling to the terminal, in which the trigger signaling is configured to instruct the terminal to trigger HARQ disabling, and to enable a HARQ management and control function within a predefined time range after receiving the trigger signaling.

A third aspect of the embodiments of the present disclosure provides a communication apparatus, including: a transceiver module, configured to obtain first information; and a processing module, configured to determine, according to the first information, whether to perform HARQ feedback; in which the first information includes at least one of: a HARQ pattern; or a preset control signaling type.

In an implementation, the processing module is further configured to disable or enable the HARQ feedback based on the first information, in which the first information is the HARQ pattern.

In an implementation, the transceiver module is further configured to: receive a signaling sent by a network side device; and obtain the first information according to information indicated by the signaling.

In an optional implementation, the transceiver module is further configured to: obtain the first information based on a protocol.

In an implementation, the HARQ pattern includes at least one of: time information of HARQ disabling; or time information of HARQ enabling.

In an optional implementation, the time information includes at least one of: a time starting position; a time ending position; or time length information.

In an optional implementation, the processing module is further configured to: determine, based on the HARQ pattern, whether the terminal is currently within a HARQ disabled time period, in which the HARQ pattern is the time information of HARQ disabling; in which the HARQ feedback is disabled in a case that the terminal is currently in the HARQ disabled time period; or the HARQ feedback is enabled in a case that the terminal is not currently in the HARQ disabled time period.

In an optional implementation, the processing module is further configured to: determine, based on the HARQ pattern, whether the terminal is currently within a HARQ enabled time period, in which the HARQ pattern is the time information of HARQ enabling, in which the HARQ feedback is enabled in a case that the terminal is currently in the HARQ enabled time period; or the HARQ feedback is disabled in a case that the terminal is not currently in the HARQ enabled time period.

In an optional implementation, the processing module is further configured to: determine, based on the HARQ pattern, that the terminal is currently within a HARQ disabled time period, and disable the HARQ feedback, in which the HARQ pattern is the time information of HARQ enabling and the time information of HARQ enabling; or determine, based on the time information of HARQ enabling, that the terminal is currently within a HARQ enabled time period, and enable the HARQ feedback.

In an implementation, the first information includes the preset control signaling type, and the transceiver module is further configured to: receive a control signaling sent by a network side device, and obtain a control signaling type of the control signaling.

In an optional implementation, the processing module is further configured to: enable the HARQ feedback, in which the preset control signaling type is configured to indicate that the terminal enables a HARQ function, and the control signaling type of the control signaling is the preset control signaling type; or the preset control signaling type is configured to indicate that the terminal disables the HARQ function, and the control signaling type of the control signaling is not the preset control signaling type; or disable the HARQ feedback, in which the preset control signaling type is configured to indicate that the terminal enables a HARQ function, and the control signaling type of the control signaling is not the preset control signaling type; or the preset control signaling type is configured to indicate that the terminal disables the HARQ function, and the control signaling type of the control signaling is the preset control signaling type.

Optionally, before receiving the control signaling sent by the network side device, and obtaining the control signaling type of the control signaling, the transceiver module is further configured to: receive a trigger signaling sent by the network side device, in which the trigger signaling is configured to instruct the terminal to trigger HARQ disabling; and enable a HARQ management and control function within a predefined time range after receiving the trigger signaling.

Optionally, the processing module is further configured to: enable the HARQ feedback; in which the preset control signaling type is configured to indicate that the terminal enables the HARQ function, the control signaling is received within the predefined time range, and the control signaling type of the control signaling is the preset control signaling type; or in which the preset control signaling type is configured to indicate that the terminal disables the HARQ function, the control signaling is received within the predefined time range, and the control signaling type of the control signaling is not the preset control signaling type; disabling the HARQ feedback includes: disabling the HARQ feedback; in which the preset control signaling type is configured to indicate that the terminal enables the HARQ function, the control signaling is received within the predefined time range, and the control signaling type of the control signaling is not the preset control signaling type; or in which the preset control signaling type is configured to indicate that the terminal disables the HARQ function, the control signaling is received within the predefined time range, and the control signaling type of the control signaling is the preset control signaling type.

A fourth aspect of the embodiments of the present disclosure provides a communication apparatus applied to a network side device, and the communication apparatus includes: a transceiver module, configured to send first information to a terminal, in which the first information is configured to indicate whether the terminal performs HARQ feedback or not; the first information comprises at least one of: a HARQ pattern; or a preset control signaling type.

In an implementation, the HARQ pattern includes at least one of: time information of HARQ disabling; or time information of HARQ enabling.

In an optional implementation, the time information includes at least one of: a time starting position; a time ending position; or time length information.

In an implementation, the first information includes the preset control signaling type, and the transceiver module is further configured to: send a control signaling to the terminal, in which the control signaling is used for the terminal to enable the HARQ feedback in a case that a control signaling type of the control signaling is the preset control signaling type, and to disable the HARQ feedback in a case that the control signaling type of the control signaling is not the preset control signaling type; or the control signaling is used for the terminal to disable the HARQ feedback in a case that the control signaling type of the control signaling is the preset control signaling type, and to enable the HARQ feedback in a case that the control signaling type of the control signaling is not the preset control signaling type.

In an optional implementation, before sending the control signaling to the terminal, the transceiver module is further configured to: send a trigger signaling to the terminal, in which the trigger signaling is configured to instruct the terminal to trigger HARQ disabling, and to enable a HARQ management and control function within a predefined time range after receiving the trigger signaling.

A fifth aspect of the embodiments of the present disclosure provides a communication apparatus including a processor. When the processor calls computer programs in a memory, the method provided in the aforementioned first aspect is implemented.

A sixth aspect of the embodiments of the present disclosure provides a communication apparatus including a processor. When the processor calls computer programs in a memory, the method provided in the aforementioned second aspect is implemented.

A seventh aspect of the embodiments of the present disclosure provides a communication apparatus including a processor and a memory. The memory has computer programs stored therein, the processor is configured to execute the computer programs stored in the memory, to cause the communication apparatus to perform the method provided in the aforementioned first aspect.

An eighth aspect of the embodiments of the present disclosure provides a communication apparatus including a processor and a memory. The memory has computer programs stored therein, the processor is configured to execute the computer programs stored in the memory, to cause the communication apparatus to perform the method provided in the aforementioned second aspect.

A ninth aspect of the embodiments of the present disclosure provides a communication apparatus including a processor and an interface circuit. The interface circuit is configured to receive code instructions and transmit the code instructions to the processor, the processor is configured to execute the code instructions, to cause the communication apparatus to perform the method provided in the aforementioned first aspect.

A tenth aspect of the embodiments of the present disclosure provides a communication apparatus including a processor and an interface circuit. The interface circuit is configured to receive code instructions and transmit the code instructions to the processor, the processor is configured to execute code instructions, to cause the communication apparatus to perform the method provided in the aforementioned second aspect.

An eleventh aspect of the embodiments of the present disclosure provides a HARQ feedback processing system. The system includes the communication apparatus of the third aspect and the communication apparatus of the fourth aspect; or the system includes the communication apparatus of the fifth aspect and the communication apparatus of the sixth aspect; or the system includes the communication apparatus of the seventh aspect and the communication apparatus of the eighth aspect; or the system includes the communication apparatus of the ninth aspect and the communication apparatus of the tenth aspect.

A twelfth aspect of the embodiments of the present disclosure provides a computer-readable storage medium. The computer-readable storage medium is configured to store instructions used by the above terminal. When the instructions are executed, the terminal is caused to implement the method of the first aspect.

A thirteenth aspect of the embodiments of the present disclosure provides a computer-readable storage medium. The computer-readable storage medium is configured to store instructions used by the above network side device. When the instructions are executed, the network side device is caused to implement the method of the second aspect.

A fourteenth aspect of the embodiments of the present disclosure provides a computer program product including computer programs. When the computer programs are executed by a computer, the computer is caused to implement the method of the first aspect.

A fifteenth aspect of the embodiments of the present disclosure provides a computer program product including computer programs. When the computer programs are executed by a computer, the computer is caused to implement the method of the second aspect.

A sixteenth aspect of the embodiments of the present disclosure provides a chip system. The chip system includes at least one processor and an interface for supporting the terminal in realizing the functions involved in the first aspect, e.g., determining or processing at least one of data or information involved in the method described above. In a possible design, the chip system further includes a memory. The memory is configured to store necessary computer programs and data of the terminal. The chip system may consist of chips or may include a chip and other discrete devices.

A seventeenth aspect of the embodiments of the present disclosure provides a chip system. The chip system includes at least one processor and an interface for supporting the network side device in realizing the functions involved in the second aspect, e.g., determining or processing at least one of data or information involved in the method described above. In a possible design, the chip system further includes a memory. The memory is configured to store necessary computer programs and data of the network side device. The chip system may consist of chips or may include a chip and other discrete devices.

An eighteenth aspect of the embodiments of the present disclosure provides a computer program. When the computer program is running on a computer, the computer is caused to implement the method of the first aspect.

A nineteenth aspect of the embodiments of the present disclosure provides a computer program. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic structural diagram of a communication system according to an embodiment;
FIG. 2 is a schematic flowchart of a hybrid automatic repeat request (HARQ) feedback processing method according to an embodiment;
FIG. 3 is a schematic flowchart of a HARQ feedback processing method according to an embodiment;
FIG. 4 is a schematic flowchart of a HARQ feedback processing method according to an embodiment;
FIG. 5 is a schematic flowchart of a HARQ feedback processing method according to an embodiment;
FIG. 6 is a schematic flowchart of a HARQ feedback processing method according to an embodiment;
FIG. 7 is a schematic flowchart of a HARQ feedback processing method according to an embodiment;
FIG. 8 is a schematic flowchart of a HARQ feedback processing method according to an embodiment;
FIG. 9 is a schematic flowchart of a HARQ feedback processing method according to an embodiment;
FIG. 10 is a schematic flowchart of a HARQ feedback processing method according to an embodiment;
FIG. 11 is a schematic flowchart of a HARQ feedback processing method according to an embodiment;
FIG. 12 is a schematic block diagram of a communication apparatus according to an embodiment;
FIG. 13 is a schematic block diagram of a communication apparatus according to an embodiment; and
FIG. 14 is a schematic block diagram of a chip according to an embodiment.

### DETAILED DESCRIPTION

Reference will now be made in detail to the embodiments of the present disclosure, examples of which are illustrated in the accompanying drawings. The following description refers to the accompanying drawings in which the same numbers in different drawings represent the same or similar elements, or the elements having the same or similar functions. The embodiments described below with reference to the accompanying drawings are exemplary and intended to explain the present disclosure and are not to be construed as limitations of the present disclosure. In the description of the present disclosure, unless otherwise stated, the character "/" generally indicates that the associated objects prior to and after the character "/" is an "or" relation. For example, "A/B" indicates A or B. The term "and/or" describes a relation of associated objects, which indicates three relations, for example, "A and/or B" indicates that A exists alone, A and B both exist, and B exists alone.

Terms used in the embodiments of the present disclosure are only intended to describe specific embodiments, rather than to limit the embodiments of the present disclosure. "A" and "the" in a singular form used in the present disclosure are also intended to include a plural form unless other meanings are explicitly indicated in the context otherwise.

It should be understood that term 'if' used here can be interpreted as "when", "while" or "in response to determining".

Reference will now be made in detail to the embodiments of the present disclosure, examples of which are illustrated in the accompanying drawings. The following description refers to the accompanying drawings in which the same numbers in different drawings represent the same or similar elements. The embodiments described below with reference to the accompanying drawings are exemplary and intended to explain the present disclosure and are not to be construed as limitations of the present disclosure.

In order to better understand a hybrid automatic repeat request (HARQ) feedback processing method disclosed in the embodiments of the present disclosure, a communication system to which the embodiments of the present disclosure can be applied is first described below.

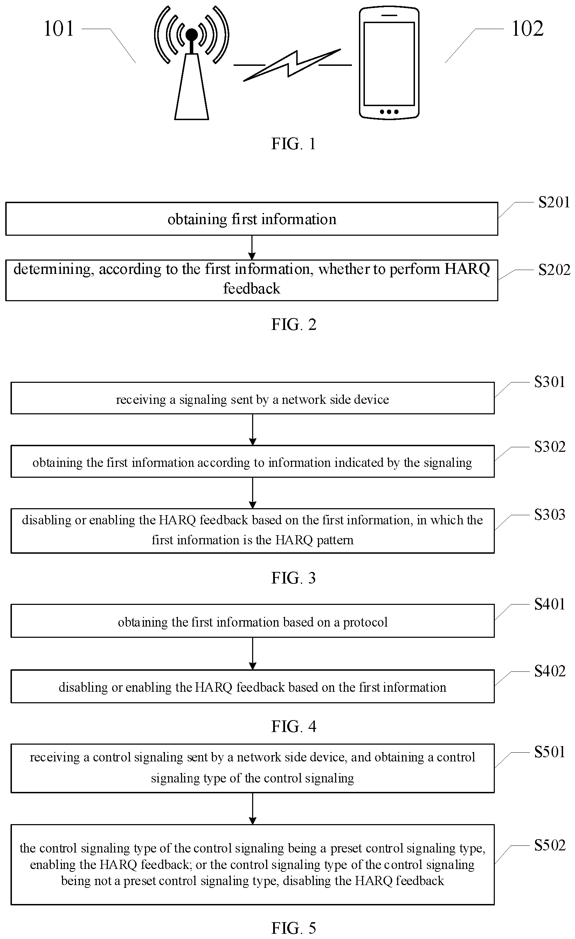

Refer to FIG. 1 which shows a schematic structural diagram of a communication system provided according to an embodiment of the present disclosure. The communication system can include, but is not limited to one network side device and one terminal, the number and form of devices shown in FIG. 1 are only intended to illustrate, rather than to constitute limitations on the embodiments of the present application. In actual applications, two or more network side devices and two or more terminals can be included. The communication system shown in FIG. 1 is illustrated to include one network side device 101 and one terminal 102.

It should be noted that the technical solutions of the embodiments of the present disclosure can be applied to various communication systems, for example, a long term evolution (LTE) system, a 5th generation (5G) mobile communication system, a 5G new radio (NR) system, or other future novel mobile communication systems.

The network side device 101 in the embodiments of the present disclosure is an entity for transmitting or receiving signals at a network side. For example, the network side device 101 can be an evolved NodeB (eNB), a transmission reception point (TRP), a next generation NodeB (gNB) in the NR system, a base station in other future mobile communication systems or an access point in a wireless fidelity (WiFi) system, etc. In the embodiments of the present disclosure, a specific technology and a specific device form that are adopted by the network side device are not limited. The network side device provided in the embodiments of the present disclosure can be composed of a central unit (CU) and a distributed unit (DU), and the CU can also be referred to as a control unit, the protocol layer of the network side device, such as a base station, can be split by adopting a CU-DU structure, parts of functions of the protocol layer are centrally controlled by the CU, and parts or all of remaining functions of the protocol layer are distributed in the DU, and the DU is centrally controlled by the CU.

The terminal 102 in the embodiments of the present disclosure is an entity, such as a mobile phone, for receiving or transmitting signals. The terminal can also be referred to as a terminal, user equipment (UE), a mobile station (MS), a mobile terminal (MT), etc. The terminal can be a car with a communication function, a smart car, a mobile phone, a wearable device, a tablet computer (Pad), a computer with a radio transceiver function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present disclosure, a specific technology and a specific device form that are adopted by the terminal are not limited.

It can be understood that the communication system described in the embodiments of the present disclosure is intended to describe the technical solutions in the embodiments of the present disclosure more clearly, rather than to constitute a limitation on the technical solutions provided in the embodiments of the present disclosure. It can be known by those of ordinary skill in the art that, with the evolution of a system architecture and the emergence of new service scenarios, the technical solutions provided in the embodiments of the present disclosure is equally applicable to similar technical problems.

A HARQ feedback processing method and apparatus provided in the present disclosure will be introduced in detail below in conjunction with the accompanying drawings.

Reference is now made to FIG. 2, which is a schematic flowchart of a HARQ feedback processing method provided by an embodiment of the present disclosure. As shown in FIG. 2, the method is performed by a terminal, and may include, but is not limited to, the following steps.

At step S201, first information is obtained.

In an embodiment of the present disclosure, the first information includes at least one of the following: a HARQ pattern; or a preset control signaling type.

In the embodiments of the present disclosure, the preset control signaling type represents a signaling type for indicating that the terminal enables or disables a HARQ function. The specific implementation will be given in other embodiments of the present disclosure, which is not limited in the embodiments of the present disclosure and will not be described in detail.

As an example, the preset control signaling type may be MAC (Media Access Control) CE (Control Element).

It should be noted that, in the embodiments of the present disclosure, the HARQ pattern is information defined by the present disclosure and used to indicate a time period during which the terminal supports HARQ feedback or not. The HARQ pattern includes at least one of the following: time information of HARQ disabling; or time information of HARQ enabling. As an example, the HARQ pattern may include time information of HARQ disabling; or the HARQ pattern may include time information of HARQ enabling; or the HARQ pattern may include time information of HARQ disabling and time information of HARQ enabling.

For example, the terminal can obtain the HARQ pattern; or the terminal can obtain the preset control signaling type; or the terminal can obtain the HARQ pattern and the preset control signaling type.

The implementation for the terminal to obtain the above information will be given in other embodiments of the present disclosure, which is not limited in the embodiments of the present disclosure and will not be described again.

At step S202, it is determined, according to the first information, whether to perform HARQ feedback.

For example, taking the first information including the HARQ pattern as an example, the terminal can determine to disable or enable the HARQ feedback according to the HARQ pattern. The specific implementation will be given in other embodiments of the present disclosure, which is not limited in the embodiments of the present disclosure. Alternatively, taking the first information including the preset control signaling type as an example, the terminal can determine whether to perform the HARQ feedback according to the preset control signaling type. The specific implementation will be given in other embodiments of the present disclosure, which is not limited in the embodiments of the present disclosure. Alternatively, taking the first information including the HARQ pattern and the preset control signaling type as an example, the terminal can determine whether to perform the HARQ feedback according to the HARQ pattern and the preset control signaling type. The specific implementation will be given in other embodiments of the disclosure, which is not limited in the embodiments of the present disclosure.

By implementing the embodiments of the present disclosure, the terminal can determine, based on obtained first information, whether to perform the HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

In an implementation of the embodiments of the present disclosure, the terminal can obtain the HARQ pattern from the signaling sent by the network side device, to disable or enable the HARQ feedback based on the HARQ pattern. As an example, with reference to FIG. 3, FIG. 3 is a schematic flowchart of a HARQ feedback processing method provided by an embodiment of the present disclosure. The first information in the method is a signaling including the HARQ pattern, and the method is performed by the terminal. As shown in FIG. 3, the method may include but is not limited to the following steps.

At step S301, a singling sent by the network side device is received.

In the embodiments of the present disclosure, the signaling may be downlink control information (DCI), or may also be other signaling such as a higher-layer signaling, e.g., RRC signaling, MAC CE, etc., which is not specifically limited here.

At step S302, first information is obtained according to information indicated by the signaling.

For example, the terminal parses the information indicated by the signaling sent by the network side device to obtain the HARQ pattern. That is to say, the network side device can enable the terminal to obtain the HARQ pattern based on the signaling notification, so that the terminal determines whether to perform the HARQ feedback based on the HARQ pattern.

At step S303, the HARQ feedback is disabled or enabled based on the first information. The first information is the HARQ pattern.

In an optional implementation, when the HARQ pattern includes time information of HARQ disabling, the HARQ feedback is disabled in a case that the terminal is currently within a HARQ disabled time period; or the HARQ feedback is enabled in a case that the terminal is not currently within the HARQ disabled time period.

For example, the HARQ pattern including the time information of HARQ disabling is parsed to obtain the HARQ disabled time period. If the current time is within the disabled time period, the terminal disables the HARQ feedback; or if the current time is not within the disabled time period, the terminal enables the HARQ feedback.

As an example, take the time period of the time information of HARQ disabling included in the HARQ pattern being 10:00 to 13:00 as an example. Assuming that the current time is 12 o'clock, the terminal disables the HARQ feedback; assuming that the current time is 14 o'clock, the terminal enables the HARQ feedback.

It should be noted that, in embodiments of the present disclosure, there may be one or more HARQ disabled time periods.

As an example, the HARQ disabled time period may be 10:00 to 13:00. Alternatively, the HARQ disabled time periods may be 8:00 to 9:00 and 10:00 to 13:00.

In an optional implementation, when the HARQ pattern includes time information of HARQ enabling, if the terminal is currently within a HARQ enabled time period, the HARQ feedback is enabled; or, if the terminal is currently not within the HARQ enabled time period, the HARQ feedback is disabled.

For example, the time information of HARQ enabling included in the HARQ pattern is parsed to obtain the HARQ enabled time period. If the current time is within the enabled time period, the terminal enables the HARQ feedback; or, if the current time is not within the enabled time period, the terminal disables the HARQ feedback.

As an example, take the time period of the time information of HARQ enabling included in the HARQ pattern being 13:00 to 15:00 as an example. Assuming that the current time is 15 o'clock, the terminal enables the HARQ feedback; assuming that the current time is 16 o'clock, the terminal disables the HARQ feedback.

It should be noted that, in embodiments of the present disclosure, there may be one or more HARQ disabled time periods.

As an example, the HARQ enabled time period may be 13:00 to 15:00. Alternatively, the HARQ disabled time periods may be 8:00 to 9:00 and 13:00 to 15:00.

In an optional implementation, when the HARQ pattern includes the time information of HARQ disabling and the time information of HARQ enabling, it is determined, based on the time information of HARQ disabling, that the terminal is currently within the HARQ disabled time period, the HARQ feedback is disabled; or it is determined, based on the time information of HARQ enabling, that the terminal is currently within the HARQ enabled time period, the HARQ feedback is enabled. Alternatively, the terminal is currently not within the HARQ disabled time period, the HARQ feedback is enabled.

For example, the time information of HARQ disabling and the time information of HARQ enabling included in the HARQ pattern are parsed to obtain the HARQ disabled time period and the HARQ enabled time period. If the current time is within the disabled time period, the terminal disables the HARQ feedback; or, if the current time is within the enabled time period, the terminal enables the HARQ feedback; or, if the current time is not within the disabled time period, the terminal enables the HARQ feedback.

As an example, take the time period of the time information of HARQ disabling included in the HARQ pattern being 10:00 to 13:00, and the time period of the time information of HARQ enabling included in the HARQ pattern being 13:00 to 15:00 as an example. Assuming that the current time is 12 o'clock, the current time is within the disabled time period, and the terminal disables the HARQ feedback; assuming that the current time is 15 o'clock, the current time is within the enabled time period, and the terminal enables the HARQ feedback; assuming that the current time is 8 o'clock, the current time is not within the disabled time period, and the terminal enables the HARQ feedback.

In an embodiment of the present disclosure, the time information includes at least one of the following: a time starting position; a time ending position; or time length information.

As an example, take the time information including the time starting position as an example. After the terminal receives the HARQ pattern containing the time information, based on the HARQ pattern, the terminal disables or enables the HARQ feedback within the time period after a moment corresponding to the time starting position.

As another example, take the time information including the time ending position as an example. Based on the HARQ pattern, the terminal disables or enables the HARQ feedback within a time period taking the time when the HARQ pattern is received as the starting time and taking the time corresponding to the time ending position as the ending time.

As another example, take the time information including time length information as an example. Based on the HARQ pattern, the terminal disables or enables the HARQ feedback within a time period taking the time when the HARQ pattern is received as the starting time and having the time length specified by the time length information.

As another example, take the time information including the time starting position and the time length information as an example. Based on the HARQ pattern, the terminal disables or enables the HARQ feedback within a time period taking the time corresponding to the time starting position as the starting time and having the time length corresponding to the time length information.

As another example, take the time information including the time length information and the time ending position as an example. Based on the HARQ pattern, the terminal disables or enables the HARQ feedback within a time period having the time length corresponding to the time length information and taking the time corresponding to the time ending position as the ending time.

As another example, take the time information including the time starting position and the time ending position as an example. Based on the HARQ pattern, the terminal device disables or enables the HARQ feedback within a time period taking the time corresponding to the time starting position as the starting time and taking the time corresponding to the time ending position as the ending time.

By implementing the embodiments of the present disclosure, the terminal can enable or disable the HARQ feedback within a preset time period based on the HARQ pattern obtained from the first information sent by the network side device, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

In an implementation of the embodiments of the present disclosure, the terminal device can also obtain the HARQ pattern based on a protocol. As an example, with reference to FIG. 4, FIG. 4 is a schematic flowchart of a HARQ feedback processing method provided by an embodiment of the present disclosure. The method is performed by the terminal. As shown in FIG. 4, the method may include but is not limited to the following steps.

At step S401, first information is obtained based on the protocol.

For example, the terminal can obtain the HARQ pattern in a predefined manner through agreement of the protocol.

For example, the terminal can obtain the HARQ pattern by reading pre-configured configuration information.

At step S402, the HARQ feedback is disabled or enabled based on the HARQ pattern.

In the embodiments of the present disclosure, the step S402 can be implemented in any manner in the embodiments of the present disclosure, which is not limited in the embodiments of the present disclosure and will not be described again.

By implementing the embodiments of the present disclosure, the terminal can enable or disable the HARQ feedback within a preset time period based on the HARQ pattern obtained based on the protocol, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

In some embodiments of the present disclosure, HARQ patterns may be configured separately for an uplink transmission and a downlink transmission. Therefore, the terminal can disable or enable the HARQ feedback for data in the uplink transmission based on the HARQ pattern configured for the uplink transmission, and disable or enable the HARQ feedback for data in the downlink transmission based on the HARQ pattern configured for the downlink transmission.

Optionally, the terminal may determine to enable the HARQ feedback based on a predefined rule. For example, the predefined rule may be that the terminal may support the HARQ feedback function when receiving certain important control information, but may not support the HARQ feedback when receiving other information. In an implementation of the embodiments of the present disclosure, the first information may include a preset control signaling type. Therefore, after the terminal obtains the preset control signaling type through the first information, it can determine, based on a control signaling sent by the network side device, to enable the HARQ feedback. As an example, with reference to FIG. 5, FIG. 5 is a schematic flowchart of a HARQ feedback processing method provided by an embodiment of the present disclosure. The method is performed by the terminal. As shown in FIG. 5, the method may include but is not limited to the following steps.

At step S501, a control signaling sent by the network side device is received, and a control signaling type of the control signaling is obtained.

For example, the terminal parses the received control signaling sent by the network side device to obtain the type of the control signaling.

At step S502, the control signaling type of the control signaling is a preset control signaling type, the HARQ feedback is enabled; or the control signaling type of the control signaling is not the preset control signaling type, the HARQ feedback is disabled.

For example, if the control signaling type of the control signaling received by the terminal is the same as the preset control signaling type, the HARQ feedback is enabled; or, if the type of the control signaling received by the terminal is different from the preset control signaling type, the HARQ feedback is disabled.

By implementing the embodiments of the present disclosure, the terminal can determine to enable the HARQ feedback based on the received control signaling, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

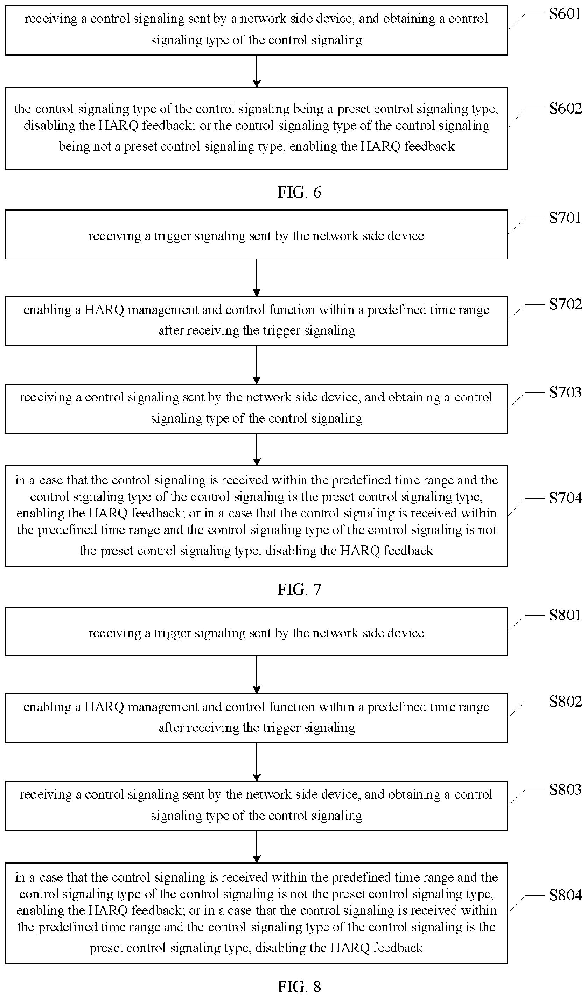

Optionally, the terminal may determine to disable the HARQ feedback based on a predefined rule. For example, the predefined rule may be that the terminal may not support the HARQ feedback function when receiving certain important control information, but may support the HARQ feedback when receiving other information. In an implementation of the embodiments of the present disclosure, after the terminal obtains the preset control signaling type through the first information, it can determine, based on a control signaling sent by the network side device, to disable the HARQ feedback. As an example, with reference to FIG. 6, FIG. 6 is a schematic flowchart of a HARQ feedback processing method provided by an embodiment of the present disclosure. The method is performed by the terminal. As shown in FIG. 6, the method may include but is not limited to the following steps.

At step S601, a control signaling sent by the network side device is received, and a control signaling type of the control signaling is obtained.

For example, the terminal parses the received control signaling sent by the network side device to obtain the type of the control signaling.

**At** step S602, the control signaling type of the control signaling is a preset control signaling type, the HARQ feedback is disabled; or the control signaling type of the control signaling is not the preset control signaling type, the HARQ feedback is enabled.

For example, if the control signaling type of the control signaling received by the terminal is the same as the preset control signaling type, the HARQ feedback is disabled; or, if the type of the control signaling received by the terminal is different from the preset control signaling type, the HARQ feedback is enabled.

By implementing the embodiments of the present disclosure, the terminal can determine to disable the HARQ feedback based on the received control signaling, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

Optionally, the terminal may be triggered in a trigger manner to enable a HARQ management and control function. In an implementation of the embodiments of the present disclosure, before the terminal determines to enable the HARQ feedback based on the control signaling sent by the network side device, it can enable, based on a received trigger signaling, the HARQ management and control function. As an example, with reference to FIG. 7, FIG. 7 is a schematic flowchart of a HARQ feedback processing method provided by an embodiment of the present disclosure. The method is performed by the terminal. As shown in FIG. 7, the method may include but is not limited to the following steps.

At step S701, a trigger signaling sent by the network side device is received.

In an embodiment of the present disclosure, the trigger signaling may be a higher-layer signaling or a physical layer signaling.

At step S702, the HARQ management and control function is enabled within a predefined time range after receiving the trigger signaling.

In an embodiment of the present disclosure, the predefined time range refers to a preset time period during which the HARQ management and control function is enabled.

For example, the terminal enables the HARQ management and control function within a time period taking the time when the trigger signaling is received as the starting moment and having the predefined time length, to disable the trigger signaling for the HARQ feedback.

At step S703, a control signaling sent by the network side device is received, and a control signaling type of the control signaling is obtained.

At step S704, in a case that the control signaling is received within the predefined time range and the control signaling type of the control signaling is the preset control signaling type, the HARQ feedback is enabled; or in a case that the control signaling is received within the predefined time range and the control signaling type of the control signaling is not the preset control signaling type, the HARQ feedback is disabled.

For example, if the terminal receives the control signaling within the predefined time range corresponding to the trigger signaling and the type of the control signaling is the same as the preset control signaling type, the HARQ feedback is enabled; or, if the terminal receives the control signaling within the predefined time range corresponding to the trigger signaling but the type of the control signaling is different from the preset control signaling type, the HARQ feedback is disabled.

By implementing the embodiments of the present disclosure, the terminal can enable the HARQ management and control function based on trigger signaling, and determine, based on the control signaling, to enable the HARQ feedback within the preset time range, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

Optionally, in an implementation of the embodiments of the present disclosure, before the terminal determines to disable the HARQ feedback based on a control signaling sent by the network side device, it can enable, based on a received trigger signaling, a HARQ management and control function. As an example, with reference to FIG. 8, FIG. 8 is a schematic flowchart of a HARQ feedback processing method provided by an embodiment of the present disclosure. The method is performed by the terminal. As shown in FIG. 8, the method may include but is not limited to the following steps.

At step S801, a trigger signaling sent by the network side device is received.

At step S802, the HARQ management and control function is enabled within a predefined time range after receiving the trigger signaling.

In the embodiment of the present disclosure, the step S802 can be implemented in any manner in the embodiments of the present disclosure, which is not limited in the embodiments of the present disclosure and will not be described again.

At step S803, a control signaling sent by the network side device is received, and a control signaling type of the control signaling is obtained.

In the embodiments of the present disclosure, the step S803 can be implemented in any manner in the embodiments of the present disclosure, which is not limited in the embodiments of the present disclosure and will not be described again.

At step S804, in a case that the control signaling is received within the predefined time range and the control signaling type of the control signaling is not the preset control signaling type, the HARQ feedback is enabled; or in a case that the control signaling is received within the predefined time range and the control signaling type of the control signaling is the preset control signaling type, the HARQ feedback is disabled.

For example, if the terminal receives the control signaling within the predefined time range corresponding to the trigger signaling and the type of the control signaling is different from the preset control signaling type, the HARQ feedback is enabled; or, if the terminal receives the control signaling within the predefined time range corresponding to the trigger signaling but the type of the control signaling is the same as the preset control signaling type, the HARQ feedback is disabled.

By implementing the embodiments of the present disclosure, the terminal can enable the HARQ management and control function based on trigger signaling, and determine, based on the control signaling, to disable the HARQ feedback within the preset time range, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

The above-mentioned embodiments of the present disclosure introduce the methods provided by the embodiments of the present disclosure from the perspective of a terminal. In the following, the methods provided by the embodiments of the present disclosure will be further introduced from the perspective of a network side device.

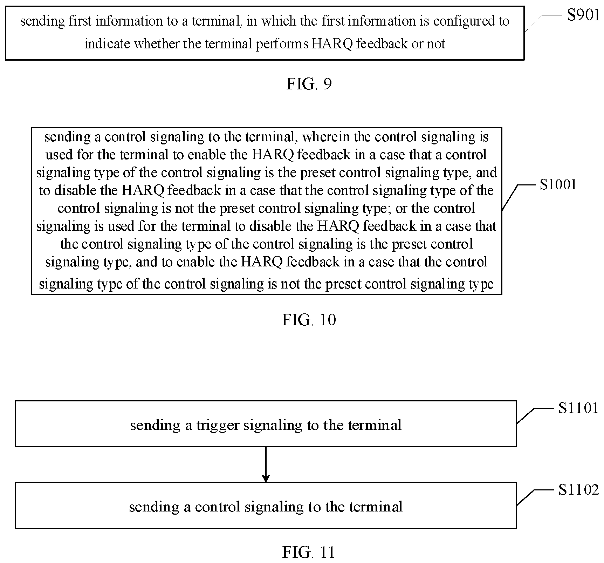

With reference to FIG. 9, FIG. 9 is a schematic flowchart of a HARQ feedback processing method provided by an embodiment of the present disclosure. The method is performed by the network side device. As shown in FIG. 9, the method may include but is not limited to the following steps.

At step S901, first information is sent to a terminal, in which the first information is configured to indicate whether the terminal performs HARQ feedback.

The first information includes at least one of the following: a HARQ pattern; or a preset control signaling type.

In an embodiment of the present disclosure, the HARQ pattern includes at least one of the following: time information of HARQ disabling; or time information of HARQ enabling.

In an optional embodiment of the present disclosure, the time information includes at least one of the following: a time starting position; a time ending position; or time length information.

In an embodiment of the present disclosure, the network side device can send the HARQ pattern to the terminal based on the signaling notification, so that the terminal determines whether to perform the HARQ feedback based on the HARQ pattern. Alternatively, the network side device may also send a control signaling in a preset control signaling type, so that the terminal determines whether to perform the HARQ feedback.

By implementing the embodiments of the present disclosure, the network side device sends the first information to the terminal, to cause the terminal to determine, based on a control signaling, whether to perform the HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

With reference to FIG. 10, FIG. 10 is a schematic flowchart of a HARQ feedback processing method provided by an embodiment of the present disclosure. The method is performed by the network side device. In the method, the first information includes a preset control signaling type. As shown in FIG. 10, the method may include but is not limited to the following steps.

At step S1001, a control signaling is sent to a terminal. The control signaling is used for the terminal to enable HARQ feedback in a case that a control signaling type of the control signaling is the preset control signaling type, and to disable the HARQ feedback in a case that the control signaling type of the control signaling is not the preset control signaling type. Alternatively, the control signaling is used for the terminal to disable the HARQ feedback in a case that the control signaling type of the control signaling is the preset control signaling type, and to enable the HARQ feedback in a case that the control signaling type of the control signaling is not the preset control signaling type.

As an example, assuming that the network side device needs to instruct the terminal to enable the HARQ feedback through the control signaling, the network side device sends the control signaling of the same type as the preset control signaling type to the terminal. Assuming that the network side device needs to instruct the terminal to disable the HARQ feedback through the control signaling, the network side device sends the control signaling of a different type from the preset control signaling type to the terminal.

As another example, assuming that the network side device needs to instruct the terminal to disable the HARQ feedback through the control signaling, the network side device sends the control signaling of the same type as the preset control signaling type to the terminal. Assuming that the network side device needs to instruct the terminal to enable the HARQ feedback through the control signaling, the network side device sends the control signaling of a different type from the preset control signaling type to the terminal.

By implementing the embodiments of the present disclosure, the network side device sends the control signaling to the terminal, to cause the terminal to disable or enable, based on the control signaling, the HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

In an implementation of the present disclosure, the network side device may also send a trigger signaling to the terminal, to cause the terminal to disable the HARQ feedback. As an example, with reference to FIG. 11, FIG. 11 is a schematic flowchart of a HARQ feedback processing method provided by an embodiment of the present disclosure. The method is performed by the network side device. As shown in FIG. 11, the method may include but is not limited to the following steps.

At step S1101, a trigger signaling is sent to the terminal.

In an embodiment of the present disclosure, the trigger signaling is configured to instruct the terminal to trigger HARQ disabling, and to enable a HARQ management and control function within a predefined time range after receiving the trigger signaling.

At step S1101, a control signaling is sent to the terminal.

In the embodiments of the present disclosure, the step S1101 can be implemented in any manner in the embodiments of the present disclosure, which is not limited in the embodiments of the present disclosure and will not be described again.

By implementing the embodiments of the present disclosure, the network side device sends the trigger signaling and the control signaling to the terminal, to cause the terminal to disable or enable, based on the above signaling, the HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

In the above-described embodiments of the present disclosure, the methods provided in the embodiments of the present disclosure are described from the perspective of the terminal and the network side device, respectively. In order to implement each of the functions in the methods provided by the above embodiments of the present disclosure, the network side device and the terminal may include a hardware structure and/or a software module to implement each of the above functions in the form of a hardware structure, a software module, or a combination of the hardware structure and the software module. A certain function of the above-described functions may be performed in the form of a hardware structure, a software module, or a combination of the hardware structure and the software module.

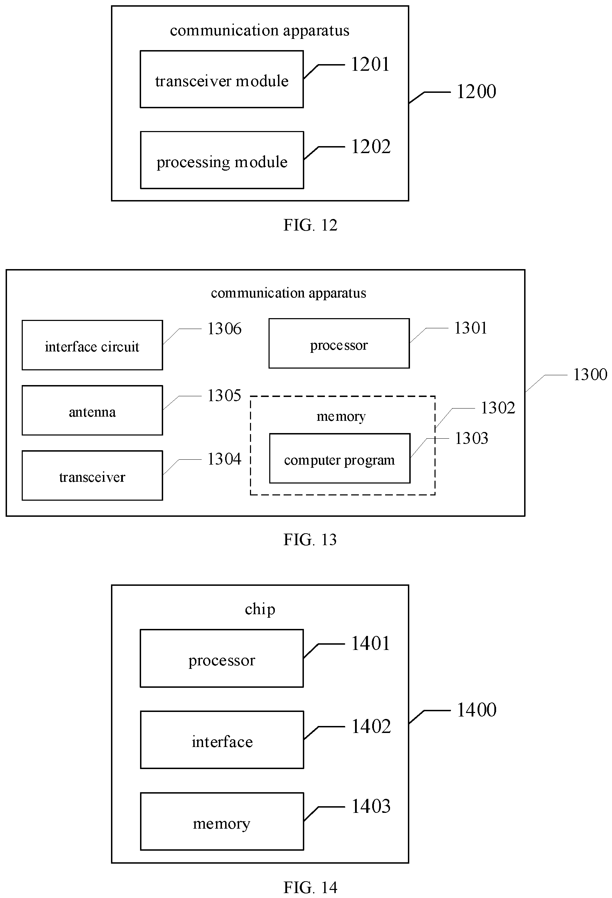

As shown in FIG. 12, FIG. 12 is a schematic diagram of a communication apparatus 1200 provided in an embodiment of the disclosure. The communication apparatus 1200 shown in FIG. 12 may include a transceiver module 1201 and a processing module 1202. The transceiver module 1201 may include a sending module and/or a receiving module. The sending module is used to implement a sending function, and the receiving module is used to implement a receiving function. The transceiver module 1201 can implement the sending function and/or the receiving function.

The communication apparatus 1200 may be a terminal, an apparatus in the terminal, or an apparatus capable of being used together with the terminal. Alternatively, the communication apparatus 1200 may be a network side device, an apparatus in the network side device, or an apparatus capable of being used together with the network side device.

The communication apparatus 1200 is a terminal. The transceiver module 1201 is configured to obtain first information. The processing module 1202 is configured to determine, according to the first information, whether to perform HARQ feedback; in which the first information includes at least one of: a HARQ pattern; or a preset control signaling type.

In an implementation, the processing module 1202 is further configured to disable or enable the HARQ feedback based on the first information, in which the first information is the HARQ pattern.

In an optional implementation, the transceiver module 1202 is further configured to: receive a signaling sent by a network side device; and obtain the first information according to information indicated by the signaling.

In an optional implementation, the transceiver module 1202 is further configured to: obtain the first information based on a protocol.

In an implementation, the HARQ pattern includes at least one of: time information of HARQ disabling; or time information of HARQ enabling.

In an optional implementation, the time information includes at least one of: a time starting position; a time ending position; or time length information.

In an optional implementation, the processing module 1202 is further configured to: determine, based on the HARQ pattern, whether the terminal is currently within a HARQ disabled time period, in which the HARQ pattern is the time information of HARQ disabling; in which the HARQ feedback is disabled in a case that the terminal is currently in the HARQ disabled time period; or the HARQ feedback is enabled in a case that the terminal is not currently in the HARQ disabled time period.

In an optional implementation, the processing module 1202 is further configured to: determine, based on the HARQ pattern, whether the terminal is currently within a HARQ enabled time period, in which the HARQ pattern is the time information of HARQ enabling, in which the HARQ feedback is enabled in a case that the terminal is currently in the HARQ enabled time period; or the HARQ feedback is disabled in a case that the terminal is not currently in the HARQ enabled time period.

In an optional implementation, the processing module 1202 is further configured to: determine, based on the HARQ pattern, that the terminal is currently within a HARQ disabled time period, and disable the HARQ feedback, in which the HARQ pattern is the time information of HARQ enabling and the time information of HARQ enabling; or determine, based on the time information of HARQ enabling, that the terminal is currently within a HARQ enabled time period, and enable the HARQ feedback.

In an implementation, the first information includes the preset control signaling type, and the transceiver module 1201 is further configured to: receive a control signaling sent by a network side device, and obtain a control signaling type of the control signaling.

In an optional implementation, the processing module 1202 is further configured to: enable the HARQ feedback, in which the preset control signaling type is configured to indicate that the terminal enables a HARQ function, and the control signaling type of the control signaling is the preset control signaling type; or the preset control signaling type is configured to indicate that the terminal disables the HARQ function, and the control signaling type of the control signaling is not the preset control signaling type; or disable the HARQ feedback, in which the preset control signaling type is configured to indicate that the terminal enables a HARQ function, and the control signaling type of the control signaling is not the preset control signaling type; or the preset control signaling type is configured to indicate that the terminal disables the HARQ function, and the control signaling type of the control signaling is the preset control signaling type.

Optionally, before receiving the control signaling sent by the network side device, and obtaining the control signaling type of the control signaling, the transceiver module 1201 is further configured to: receive a trigger signaling sent by the network side device, in which the trigger signaling is configured to instruct the terminal to trigger HARQ disabling; and enable a HARQ management and control function within a predefined time range after receiving the trigger signaling.

Optionally, the processing module 1202 is further configured to: enable the HARQ feedback; in which the preset control signaling type is configured to indicate that the terminal enables the HARQ function, the control signaling is received within the predefined time range, and the control signaling type of the control signaling is the preset control signaling type; or in which the preset control signaling type is configured to indicate that the terminal disables the HARQ function, the control signaling is received within the predefined time range, and the control signaling type of the control signaling is not the preset control signaling type; disabling the HARQ feedback includes: disabling the HARQ feedback; in which the preset control signaling type is configured to indicate that the terminal enables the HARQ function, the control signaling is received within the predefined time range, and the control signaling type of the control signaling is not the preset control signaling type; or in which the preset control signaling type is configured to indicate that the terminal disables the HARQ function, the control signaling is received within the predefined time range, and the control signaling type of the control signaling is the preset control signaling type.

With the communication apparatus in the embodiments of the present disclosure, the terminal may determine, based on the obtained first information, whether to perform HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

The communication apparatus 1200 is a network side device. The transceiver module 1201 is configured to send first information to a terminal, in which the first information is configured to indicate whether the terminal performs HARQ feedback or not; the first information comprises at least one of: a HARQ pattern; or a preset control signaling type.

In an implementation, the HARQ pattern includes at least one of: time information of HARQ disabling; or time information of HARQ enabling.

In an optional implementation, the time information includes at least one of: a time starting position; a time ending position; or time length information.

In an implementation, the first information includes the preset control signaling type, and the transceiver module 1201 is further configured to: send a control signaling to the terminal, in which the control signaling is used for the terminal to enable the HARQ feedback in a case that a control signaling type of the control signaling is the preset control signaling type, and to disable the HARQ feedback in a case that the control signaling type of the control signaling is not the preset control signaling type; or the control signaling is used for the terminal to disable the HARQ feedback in a case that the control signaling type of the control signaling is the preset control signaling type, and to enable the HARQ feedback in a case that the control signaling type of the control signaling is not the preset control signaling type.

In an optional implementation, before sending the control signaling to the terminal, the transceiver module 1201 is further configured to: send a trigger signaling to the terminal, in which the trigger signaling is configured to instruct the terminal to trigger HARQ disabling, and to enable a HARQ management and control function within a predefined time range after receiving the trigger signaling.

With the communication apparatus in the embodiments of the present disclosure, the network side device may send the first information to the terminal to cause the terminal to determine, based on the control signaling, whether to perform HARQ feedback, so that not only the problem of HARQ blocking due to too many HARQ processes can be avoided, but also the reduction of effectiveness of a data transmission caused by insufficient HARQ processes of the terminal can be avoided, thus improving efficiency of the data transmission of the terminal.

As illustrated in FIG. 13, FIG. 13 is a schematic diagram of a communication apparatus 1300 provided by an embodiment of the disclosure. The communication apparatus 1300 may be a network side device, or may be a terminal, or may be a chip, a chip system or a processor that supports the network side device to realize the above-described methods, or may be a chip, a chip system or a processor that supports the terminal to realize the above-described methods. The apparatus may be used to realize the methods described in the above method embodiments with reference to the description of the above-described method embodiments.

The communication apparatus 1300 may include one or more processors 13001. The processor 13001 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU, or CU), executing computer programs, and processing data of the computer programs.

Optionally, the communication apparatus 1300 may also include one or more memories 13002 on which computer programs 13003 may be stored. The processor 13001 executes the computer programs 13003 to cause the communication apparatus 1300 to perform the methods described in the above method embodiments. Optionally, data may also be stored in the memory 13002. The communication device 1300 and the memory 13002 may be provided separately or may be integrated together.

Optionally, the communication apparatus 1300 may also include a transceiver 13004 and an antenna 13005. The transceiver 13004 may be referred to as transceiver unit, transceiver machine, or transceiver circuit, for realizing the transceiver function. The transceiver 13004 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1300 may also include one or more interface circuits 13006. The interface circuits 13006 are used to receive code instructions and transmit them to the processor 13001. The processor 13001 runs the code instructions to cause the communication device 1300 to perform the method described in the method embodiments.

The communication apparatus 1300 is a terminal, the processor 13001 is used to execute the step S202 in FIG. 2, the step S302 in FIG. 3, the step S402 and step S402 in FIG. 4, the step S502 in FIG. 5, the step S602 in FIG. 6, the step S704 in FIG. 7, the step S802 and the step S804 in FIG. 8. The transceiver 13004 is used to execute the step S201 in FIG. 2, the step S301 in FIG. 3, the step S501 in FIG. 5, the step S601 in FIG. 6, the step S701 and the step S703 in FIG. 7, the step S801 and the step S803 in FIG. 8.

The communication apparatus 1300 is a network side device, the transceiver 13004 is used to execute the step S701 in FIG. 7, the step S801 in FIG. 8, the step S901 and the step S902 in FIG. 9.

In an implementation, the processor 13001 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 13001 may stores computer programs. The computer programs are executed on the processor 13001, to cause the communication apparatus 1300 to perform the methods described in the above method embodiments. The computer programs 13003 may be solidified in the processor 13001, in which case the processor 13001 may be implemented by hardware.

In an implementation, the communication apparatus 1300 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network side device or a terminal, but the scope of the communication apparatus described in the disclosure is not limited thereto, and the structure of the communication apparatus may not be limited by FIG. 13. The communication apparatus may be a stand-alone device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication apparatus is a chip or a chip system may be referred to the schematic diagram of a chip shown in FIG. 15. In FIG. 15, the chip includes a processor 1501 and an interface 1502. There may be one or more processors 1501, and there may be multiple interfaces 1502.

For the case where the chip is used to implement the functions of the terminal in the embodiments of the disclosure,

the interface 1402 is configured to obtain first information; and the processor 1401 is configured to determine, according to the first information, whether to perform HARQ feedback; in which the first information includes at least one of: a HARQ pattern; or a preset control signaling type.

In an implementation, the processor 1401 is further configured to disable or enable the HARQ feedback based on the first information, in which the first information is the HARQ pattern.

In an optional implementation, the interface 1402 is further configured to: receive a signaling sent by a network side device; and obtain the first information according to information indicated by the signaling.

In an optional implementation, the interface 1402 is further configured to: obtain the first information based on a protocol.

In an implementation, the HARQ pattern includes at least one of: time information of HARQ disabling; or time information of HARQ enabling.

In an optional implementation, the time information includes at least one of: a time starting position; a time ending position; or time length information.

In an optional implementation, the processor 1401 is further configured to: determine, based on the HARQ pattern, whether the terminal is currently within a HARQ disabled time period, in which the HARQ pattern is the time information of HARQ disabling; in which the HARQ feedback is disabled in a case that the terminal is currently in the HARQ disabled time period; or the HARQ feedback is enabled in a case that the terminal is not currently in the HARQ disabled time period.

In an optional implementation, the processor 1401 is further configured to: determine, based on the HARQ pattern, whether the terminal is currently within a HARQ enabled time period, in which the HARQ pattern is the time information of HARQ enabling, in which the HARQ feedback is enabled in a case that the terminal is currently in the HARQ enabled time period; or the HARQ feedback is disabled in a case that the terminal is not currently in the HARQ enabled time period.

In an optional implementation, the processor 1401 is further configured to: determine, based on the HARQ pattern, that the terminal is currently within a HARQ disabled time period, and disable the HARQ feedback, in which the HARQ pattern is time information of HARQ enabling and time information of HARQ enabling; or determine, based on the time information of HARQ enabling, that the terminal is currently within a HARQ enabled time period, and enable the HARQ feedback.

In an implementation, the first information includes the preset control signaling type, and the interface 1402 is further configured to: receive a control signaling sent by a network side device, and obtain a control signaling type of the control signaling.

In an optional implementation, the processor 1401 is further configured to: enable the HARQ feedback, in which the preset control signaling type is configured to indicate that the terminal enables a HARQ function, and the control signaling type of the control signaling is the preset control signaling type; or the preset control signaling type is configured to indicate that the terminal disables the HARQ function, and the control signaling type of the control signaling is not the preset control signaling type; or disable the HARQ feedback, in which the preset control signaling type is configured to indicate that the terminal enables a HARQ function, and the control signaling type of the control signaling is not the preset control signaling type; or the preset control signaling type is configured to indicate that the terminal disables the HARQ function, and the control signaling type of the control signaling is the preset control signaling type.

Optionally, before receiving the control signaling sent by the network side device, and obtaining the control signaling type of the control signaling, the interface 1402 is further configured to: receive a trigger signaling sent by the network side device, in which the trigger signaling is configured to instruct the terminal to trigger HARQ disabling; and enable a HARQ management and control function within a predefined time range after receiving the trigger signaling.

Optionally, the processor 1401 is further configured to: enable the HARQ feedback; in which the preset control signaling type is configured to indicate that the terminal enables the HARQ function, the control signaling is received within the predefined time range, and the control signaling type of the control signaling is the preset control signaling type; or in which the preset control signaling type is configured to indicate that the terminal disables the HARQ function, the control signaling is received within the predefined time range, and the control signaling type of the control signaling is not the preset control signaling type; disabling the HARQ feedback includes: disabling the HARQ feedback; in which the preset control signaling type is configured to indicate that the terminal enables the HARQ function, the control signaling is received within the predefined time range, and the control signaling type of the control signaling is not the preset control signaling type; or in which the preset control signaling type is configured to indicate that the terminal disables the HARQ function, the control signaling is received within the predefined time range, and the control signaling type of the control signaling is the preset control signaling type.

For the case where the chip is used to implement the functions of the network side device in the embodiments of the disclosure, the interface 1402 is configured to send first information to a terminal, in which the first information is configured to indicate whether the terminal performs HARQ feedback or not; the first information comprises at least one of: a HARQ pattern; or a preset control signaling type.

In an implementation, the HARQ pattern includes at least one of: time information of HARQ disabling; or time information of HARQ enabling.

In an optional implementation, the time information includes at least one of: a time starting position; a time ending position; or time length information.

In an implementation, the first information includes the preset control signaling type, and the interface 1402 is further configured to: send a control signaling to the terminal, in which the control signaling is used for the terminal to enable the HARQ feedback in a case that a control signaling type of the control signaling is the preset control signaling type, and to disable the HARQ feedback in a case that the control signaling type of the control signaling is not the preset control signaling type; or the control signaling is used for the terminal to disable the HARQ feedback in a case that the control signaling type of the control signaling is the preset control signaling type, and to enable the HARQ feedback in a case that the control signaling type of the control signaling is not the preset control signaling type.

In an optional implementation, before sending the control signaling to the terminal, the interface 1402 is further configured to: send a trigger signaling to the terminal, in which the trigger signaling is configured to instruct the terminal to trigger HARQ disabling, and to enable a HARQ management and control function within a predefined time range after receiving the trigger signaling.

Optionally, the chip further includes a memory 1403 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a HARQ feedback processing system. The system includes the communication apparatus as the terminal in the embodiment and the communication apparatus as the network side device in the embodiment of FIG. 12. Or the system includes the communication apparatus as the terminal in the embodiment and the communication apparatus as the network side device in the embodiment of FIG. 13.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The foregoing are only specific implementations of the disclosure, but the scope of protection of the disclosure is not limited thereto. Any technician skilled in the art can easily think of variations or substitutions within the technical scope disclosed in the disclosure, and the variations or substitutions shall be covered by the scope of protection of the disclosure. Therefore, the scope of protection of the disclosure only be limited by the appended claims.

## Claims

1. A hybrid automatic repeat request (HARQ) feedback processing method, performed by a terminal, and the method comprising:
obtaining first information; and
determining, according to the first information, whether to perform HARQ feedback;
wherein the first information comprises at least one of:
a HARQ pattern; or
a preset control signaling type.

2. The method according to claim 1, further comprising:
disabling or enabling the HARQ feedback based on the first information, wherein the first information is the HARQ pattern.

3. The method according to claim 2, wherein obtaining the first information comprises:
receiving a signaling sent by a network side device; and
obtaining the first information according to information indicated by the signaling.

4. The method according to claim 2, wherein obtaining the first information comprises:
obtaining the first information based on a protocol.

5. The method according to any one of claims 1 to 4, wherein the HARQ pattern comprises at least one of:
time information of HARQ disabling; or
time information of HARQ enabling.

6. The method according to claim 5, wherein the time information comprises at least one of:
a time starting position;
a time ending position; or
time length information.

7. The method according to any one of claims 2 to 6, wherein disabling or enabling the HARQ feedback based on the first information comprises:
determining, based on the HARQ pattern, whether the terminal is within a HARQ disabled time period currently, wherein the HARQ pattern is time information of HARQ disabling;
wherein the HARQ feedback is disabled in a case that the terminal is within the HARQ disabled time period currently; or the HARQ feedback is enabled in a case that the terminal is not within the HARQ disabled time period currently.

8. The method according to any one of claims 2 to 6, wherein disabling or enabling the HARQ feedback based on the first information comprises:
determining, based on the HARQ pattern, whether the terminal is within a HARQ enabled time period currently, wherein the HARQ pattern is time information of HARQ enabling;
wherein the HARQ feedback is enabled in a case that the terminal is within the HARQ enabled time period currently; or the HARQ feedback is disabled in a case that the terminal is not within the HARQ enabled time period currently.

9. The method according to any one of claims 2 to 6, wherein disabling or enabling the HARQ feedback based on the first information comprises:
determining, based on the HARQ pattern, that the terminal is within a HARQ disabled time period currently, and disabling the HARQ feedback, wherein the HARQ pattern is time information of HARQ enabling and time information of HARQ enabling; or
determining, based on time information of HARQ enabling, that the terminal is within a HARQ enabled time period currently, and enabling the HARQ feedback.

10. The method according to claim 1, wherein the first information comprises the preset control signaling type, and obtaining the first information comprises:
receiving a control signaling sent by a network side device, and obtaining a control signaling type of the control signaling.

11. The method according to claim 10, wherein determining, according to the first information, whether to perform the HARQ feedback comprises:
enabling the HARQ feedback, wherein the preset control signaling type is configured to indicate that the terminal enables a HARQ function, and the control signaling type of the control signaling is the preset control signaling type; or the preset control signaling type is configured to indicate that the terminal disables the HARQ function, and the control signaling type of the control signaling is not the preset control signaling type; or
disabling the HARQ feedback, wherein the preset control signaling type is configured to indicate that the terminal enables a HARQ function, and the control signaling type of the control signaling is not the preset control signaling type; or the preset control signaling type is configured to indicate that the terminal disables the HARQ function, and the control signaling type of the control signaling is the preset control signaling type.

12. The method according to claim 11, wherein before receiving the control signaling sent by the network side device, and obtaining the control signaling type of the control signaling, the method further comprises:
receiving a trigger signaling sent by the network side device, wherein the trigger signaling is configured to instruct the terminal to trigger HARQ disabling; and
enabling a HARQ management and control function within a predefined time range after receiving the trigger signaling.

13. The method according to claim 12,
wherein enabling the HARQ feedback comprises:
enabling the HARQ feedback;
wherein the preset control signaling type is configured to indicate that the terminal enables the HARQ function, the control signaling is received within the predefined time range, and the control signaling type of the control signaling is the preset control signaling type; or
wherein the preset control signaling type is configured to indicate that the terminal disables the HARQ function, the control signaling is received within the predefined time range, and the control signaling type of the control signaling is not the preset control signaling type;
wherein disabling the HARQ feedback comprises:
disabling the HARQ feedback;
wherein the preset control signaling type is configured to indicate that the terminal enables the HARQ function, the control signaling is received within the predefined time range, and the control signaling type of the control signaling is not the preset control signaling type; or
wherein the preset control signaling type is configured to indicate that the terminal disables the HARQ function, the control signaling is received within the predefined time range, and the control signaling type of the control signaling is the preset control signaling type.

14. A hybrid automatic repeat request (HARQ) feedback processing method, performed by a network side device, and the method comprising:
sending first information to a terminal, wherein the first information is configured to indicate whether the terminal performs HARQ feedback or not;
wherein the first information comprises at least one of:
a HARQ pattern; or
a preset control signaling type.

15. The method according to claim 14, wherein the HARQ pattern comprises at least one of:
time information of HARQ disabling; or
time information of HARQ enabling.

16. The method according to claim 15, wherein the time information comprises at least one of:
a time starting position;
a time ending position; or
time length information.

17. The method according to claim 14, wherein the first information comprises the preset control signaling type, and sending the first information to the terminal comprises:
sending a control signaling to the terminal, wherein the control signaling is used for the terminal to enable the HARQ feedback in a case that a control signaling type of the control signaling is the preset control signaling type, and to disable the HARQ feedback in a case that the control signaling type of the control signaling is not the preset control signaling type; or the control signaling is used for the terminal to disable the HARQ feedback in a case that the control signaling type of the control signaling is the preset control signaling type, and to enable the HARQ feedback in a case that the control signaling type of the control signaling is not the preset control signaling type.

18. The method according to claim 17, wherein before sending the control signaling to the terminal, the method further comprises:
sending a trigger signaling to the terminal, wherein the trigger signaling is configured to instruct the terminal to trigger HARQ disabling, and to enable a HARQ management and control function within a predefined time range after receiving the trigger signaling.

19. A communication apparatus, comprising:
a transceiver module, configured to obtain first information; and
a processing module, configured to determine, according to the first information, whether to perform HARQ feedback;
wherein the first information comprises at least one of:
a HARQ pattern; or
a preset control signaling type.

20. A communication apparatus, comprising:
a transceiver module, configured to send first information to a terminal, wherein the first information is configured to indicate whether the terminal performs HARQ feedback or not;
wherein the first information comprises at least one of:
a HARQ pattern; or
a preset control signaling type.

21. A communication apparatus comprising a processor, and a memory, wherein the memory has computer programs stored therein, and the processor is configured to execute the computer programs stored in the memory, to cause the communication apparatus to perform the method according to any of claims 1-13.

22. A communication apparatus comprising a processor, and a memory, wherein the memory has computer programs stored therein, and the processor is configured to execute the computer programs stored in the memory, to cause the communication apparatus to perform the method according to any of claims 14-18.

23. A communication apparatus comprising a processor and an interface circuit,
wherein the interface circuit is configured to receive code instructions and transmit the code instructions to the processor; and
the processor is configured to execute the code instructions to perform the method according to any of claims 1-13.

24. A communication apparatus comprising a processor, and an interface circuit,
wherein the interface circuit is configured to receive code instructions and transmit the code instructions to the processor; and
the processor is configured to execute the code instructions to perform the method according to any of claims 14-18.

25. A computer-readable storage medium having instructions stored thereon, wherein, when the instructions are executed, the method according to any one of claims 1 to 13 is implemented.

26. A computer-readable storage medium having instructions stored thereon, wherein, when the instructions are executed, the method according to any one of claims 14 to 18 is implemented.
